# EUROPEAN PATENT SPECIFICATION

(11) **EP 1 535 694 B1**
(45) Date of publication and mention of the grant of the patent: **18.04.2007**
(21) Application number: 04027865.7
(22) Date of filing: 24.11.2004
(51) Int. Cl.: B23K 26/06, H01S 3/10, G01J 1/42

(54) **Laser oscillator**
Laseroszillator
Oscillateur laser

(30) Priority: 26.11.2003 JP 2003394956
(43) Date of publication of application: 01.06.2005
(73) Proprietor: FANUC LTD, Minamitsuru-gun, Yamanashi 401-0597 (JP)
(72) Inventor: Nishikawa, Yuji Room 14-408, Fanuc Manshonharimomi, Minamitsuru-gun Yamanashi 401-0511 (JP); Yoshida,Hiroyuki Room 11-207,Fanuc Manshonharimomi, Minamitsuru-gun Yamanashi 401-0511 (JP); Machida, Hisatada Fanuc Dai3virakaramatsu, Minamitsuru-gun Yamanashi 401-0511 (JP); Takahashi, Hiromitsu, Minamitsuru-gun Yamanashi 401-0310 (JP); Arita, Soichi Room 10-305, Fanuc Manshonharimomi, Minamitsuru-gun Yamanashi 401-0511 (JP)
(74) Representative: Schmidt, Steffen J.

(56) References cited:
- EP-A- 0 557 719
- EP-A- 0 952 437
- US-A- 5 638 389
- US-B1- 6 408 013
- PATENT ABSTRACTS OF JAPAN vol. 1996, no. 11, 29 November 1996 (1996-11-29) -& JP 08 195521 A (TOSHIBA CORP), 30 July 1996 (1996-07-30)

## Description

### BACKGROUND ART

### 1. TECHNICAL FIELD

The present invention relates to a laser oscillator and, more specifically, to a laser oscillator with a control device for enhancing the stability of the laser output.

### 2. DESCRIPTION OF THE RELATED ART

Generally, it is desired that a laser oscillator has a stable laser output. In a machining laser oscillator, for example, the change of a machining state of a workpiece becomes larger as the laser output becomes unstable. In the case of cutting, there may be a part of the workpiece which is not cut completely or has much dross. In the case of welding, a welded part of the workpiece may have a wave shape. Therefore, many techniques regarding the stability of laser output have been developed.

The stability of laser output of the laser oscillator is required especially when the laser oscillator is activated. When the oscillation is started, the laser output cannot be properly controlled because the laser output varies very quickly. Therefore, as described in Japanese Patent Publication No. 2917642, a method is proposed in which the laser is previously oscillated, the temporal change of the output of the laser is detected by an optical sensor, and desired output can be obtained by a feedforward command regarding a current value. However, the feedforward command cannot deal with all operations and, therefore, a feedback command is necessary.

Feedback control, for example, may be applied to a carbon dioxide laser, as described in Japanese Patent Publication (Kokoku) No. 6-96198. Also, it is known that the actual laser output can be detected and a microprocessor of a computer numerical control (CNC) device used to execute the feedback control based on the detected output.

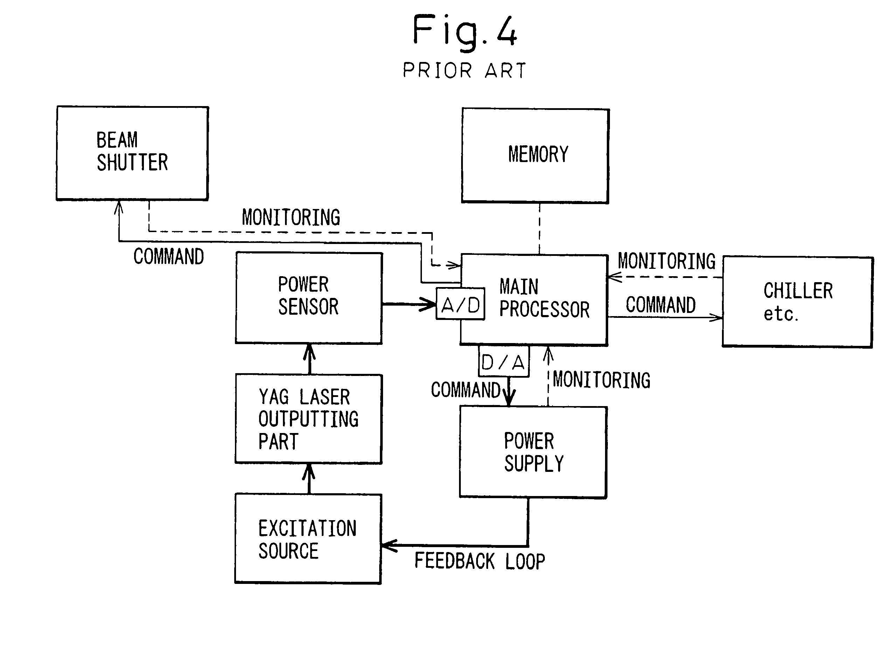

Further, as described in Japanese Patent Publication No. 2627016 or No. 3007875, it is known that a part of the laser output is detected and, the detected result is fed back to a main processor of the laser oscillator so as to enhance the stability of the laser output. An example of this as a first prior art is indicated in Fig. 4.

In the first prior art as shown in Fig. 4, the output of laser (YAG laser in this case) is detected by a power sensor provided as a monitor for the laser output. A signal detected by the power sensor is A/D converted and fed to a main processor. The main processor outputs a feedback command based on a program and a set value stored in a memory, in order to cancel a deviation between the actual laser output and a desired value (or a control set value). This feedback command is D/A converted and fed to a power supply. The power supply adjusts a current supplied to a laser excitation source corresponding to the feedback command, whereby the laser output is feedback controlled.

The main processor outputs the command for such a feedback control, and simultaneously, executes a sequential control such as a control of a beam shutter, a control and condition monitoring of a chiller (or a coolant circulating device), condition monitoring of the power supply, and a detection of other alarms. Therefore, the main processor must process many controlled variables, which cause a problem that the main processor cannot command with a less than one milli-second period, or the feedback control with a less than one milli-second period cannot be possible.

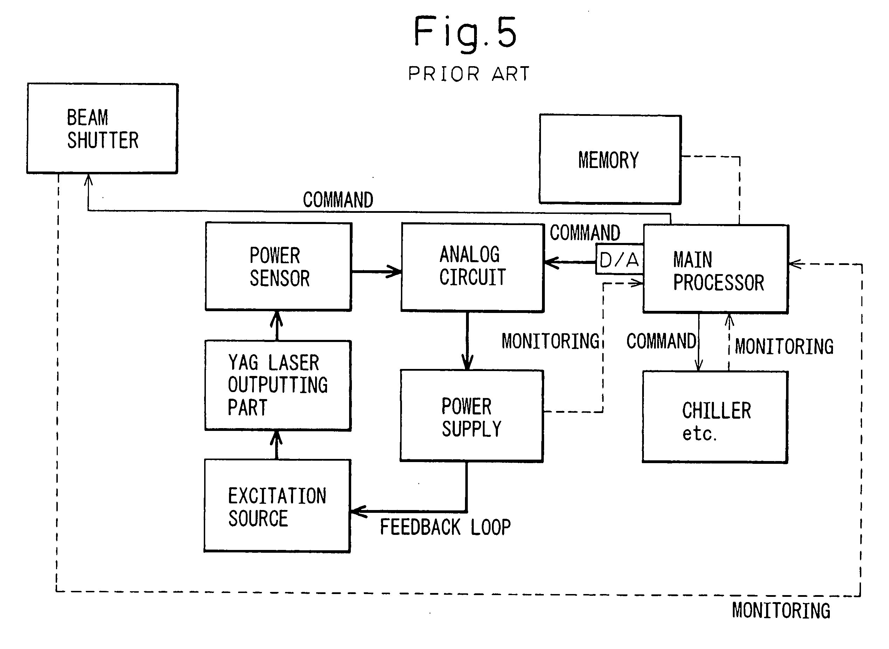

In order to solve the problem, a method is proposed in which the main processor, executing a sequence control, outputs a command to an analog operational circuit and the laser output detected by a monitor is fed back to the analog operational circuit based on the command. An example of this, as a second prior art, is indicated in Fig. 5.

In the second prior art as shown in Fig. 5, the output of laser (YAG laser in this case) is detected by a power sensor provided as a monitor for the laser output. A signal in analog format detected by the power sensor is fed to an analog circuit for processing the signal. This analog circuit has a calculation function for comparing the actual laser output with a desired value (or a control set value) and calculating a deviation between them. The analog circuit sends a feedback signal to a power supply according to a command (or a D/A converted signal) fed by a main processor. The command fed by the main processor includes the desired value (or the control set value) of laser output and a gain value to be multiplied by the deviation.

Similarly to the first prior art, the main processor simultaneously executes a sequential control such as a control of a beam shutter, a control and condition monitoring of a chiller (or a coolant circulating device), condition monitoring of the power supply, and a detection of other alarms. The above feedback control using the analog circuit is not delayed due to controlled variables of the sequential control. Further, if the analog operational circuit realize a quick response, a high-speed control with a less than one milli-second period may be possible. However, the analog circuit has no flexibility and, therefore, using the as analog circuit for controlling output of a device, such as a laser oscillator, in which the condition varies every moment, may make maintenance of the device difficult.

### SUMMARY OF THE INVENTION

It is an object of the present invention to resolve above-mentioned problem. The present invention is intended to provide a laser oscillator for reducing the amount of controlled variables to be processed by the main processor, due to the sequential control and the feedback control of the laser output, in order to execute a high-speed feedback control.

The present invention is also intended to improve maintenance of the laser device by executing a flexible control which the analog circuit cannot execute.

A laser oscillator according to the present invention includes a power supply; an excitation source supplied with electric power by the power supply; a laser outputting part for outputting laser beam excited by the excitation source; an optical output detector for detecting the laser beam output by the laser outputting part and for outputting an optical output signal; a main processor for outputting an optical output command; and a digital signal processor receiving the optical output command from the main processor and the optical output signal in digital format from the optical output detector, the digital signal processor generating a feedback signal for feedback controlling the laser output based on the comparison between the optical output command and the optical output signal in digital format, and outputting the feedback signal to the power supply.

The period of the feedback control may be set to less than 200 µs.

A photodiode may be used as the optical output detector. The photodiode preferably includes at least one material among Si, Ge, GaAs and InGaAs.

The laser oscillator may include a plurality of power supplies. In this case, the feedback control part may feed the feedback signal to each of the power supplies individually. The laser oscillator may further include a coolant circulating device. In this case, the main processor may used for controlling and condition monitoring the condition of the power supply, and for detecting alarms.

### BRIEF DESCRIPTION OF THE DRAWINGS

The above and other objects, features and advantages of the present invention will be made more apparent from the following description of the preferred embodiments thereof, with reference to the accompanying drawings wherein:
Fig. 1 is a block diagram indicating a fundamental constitution of the present invention;
Fig. 2 is a diagram for explaining a first embodiment of invention;
Fig. 3 is a diagram for explaining a second embodiment of invention;
Fig. 4 is a diagram for explaining a first prior art; and
Fig. 5 is a diagram for explaining a second prior art.

### DETAILED DESCRIPTION

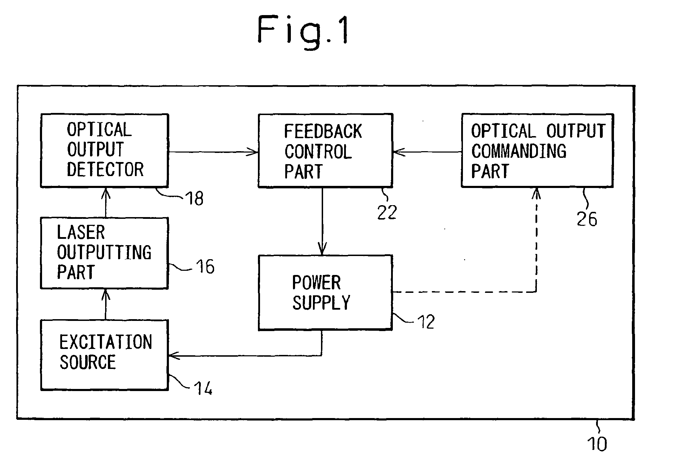

Fig. 1 is a block diagram indicating a fundamental constitution of the present invention. As shown in Fig. 1, a laser oscillator 10 according to the invention includes a power supply 12; an excitation source 14 supplied with electric power by the power supply 12; a laser outputting part 16 for outputting laser beam excited by the excitation source 14; an optical output detector or a power sensor 18 for detecting the laser beam output by the laser outputting part 16 and for outputting an optical output signal; an optical output commanding part or a main processor 26 for outputting an optical output command; and a feedback control part or a sub processor 22 receiving the optical output command from the optical output commanding part 26 and the optical output signal in digital format from the optical output detector 18, the sub processor 22 generating a feedback signal for feedback controlling the laser output based on the comparison between the optical output command and the optical output signal in digital format, and outputting the feedback signal to the power supply 12.

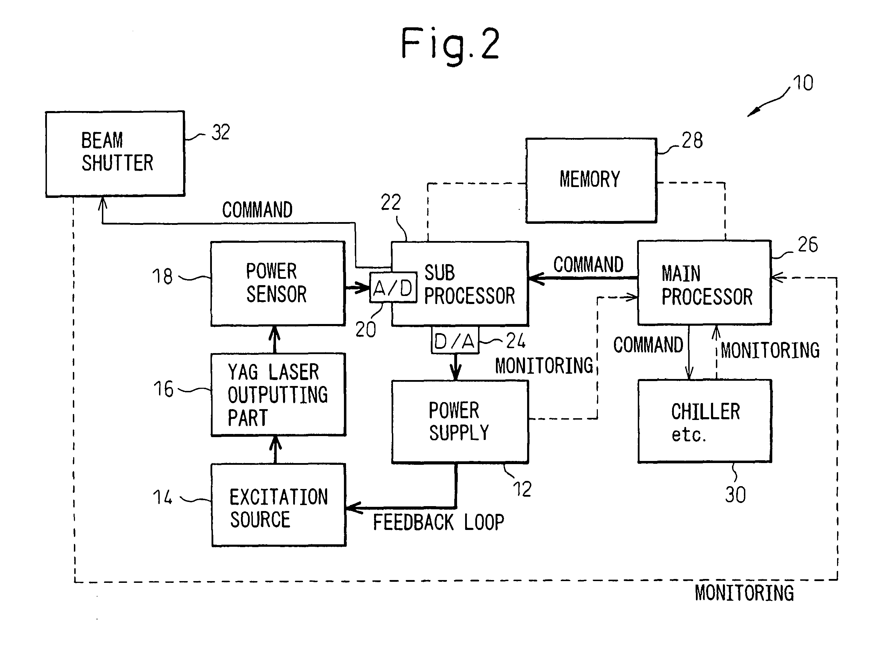

Fig. 2 is a block diagram indicating a fundamental constitution of the laser oscillator 10 according to a first embodiment of invention. As shown in Fig. 2, the laser oscillator 10 includes one power supply 12; an excitation source 14 supplied with electric power by the power supply 12; a laser outputting part 16 for outputting a laser beam (a YAG laser in this case) excited by the excitation source 14; a power sensor 18 as an output monitor for detecting the YAG laser output; an A/D converter 20 for A/D converting a detected signal from the power sensor 18; a sub processor 22 receiving the A/D converted signal from the power sensor and outputting a feedback signal to the power supply 12; a D/A converter 24 for D/A converting the output signal or the feedback signal from the sub processor 22; and a main processor 26 for outputting an optical output command to the sub processor 22. The laser oscillator 10 may further include a memory 28 storing readable data for the sub processor 22 and the main processor 26; a chiller or a coolant circulating device 30 controlled and monitored by the main processor 26; and includes a beam shutter 32 for radiating, stopping and changing the progressing direction of the laser beam.

The sub processor 22 executes some processes desired to be processed rapidly, among processes to be executed by the main processor of the above prior art (Fig. 4). The sub processor is a digital signal processor (DSP) which can execute a high-speed processing. As known, in general, a high-speed processor executes processes more rapidly by reducing a number of commands to be processed. The sub processor 22 compares the current laser output value to a set value (a desired control value), and calculates a deviation value between them, in a predetermined period. The sub processor 22 generates a feedback signal for feedback controlling the laser output based on the deviation and outputs the feedback signal to the power supply 12 according to a command from the main processor 26. The feedback signal is D/A converted by the D/A converter 24 before reaching the power supply 12. The power supply 12 adjusts the current supplied to the laser excitation source 14, according to the feedback signal, in order to control the laser output. The command from the main processor 26 includes the set value (the desired control value) of the laser output. The data of the set value can be read from the memory 28 by the main processor 26.

The main processor 26 is used for processing a sequential control such as monitoring the condition of the power supply 12, the control and monitoring of the chiller 30, and detection of other alarms. In other words, the main processor 26 is used to execute processes which do not need to be processed rapidly. Although the main processor 26 may control the beam shutter 32 which is desired to be high-speed controlled, it is preferable that the beam shutter 32 is controlled by the sub processor 22 instead.

In this way, it is possible to almost eliminate a factor regarding a load on a sequential control process, which may delay the feedback control, by shifting the processes of the feedback control desired to be processed rapidly to the sub processor 22 from the main processor 26. Further, the analog circuit as used in the above second prior art is not necessary, therefore, a flexible control can be executed by software and with high flexibility.

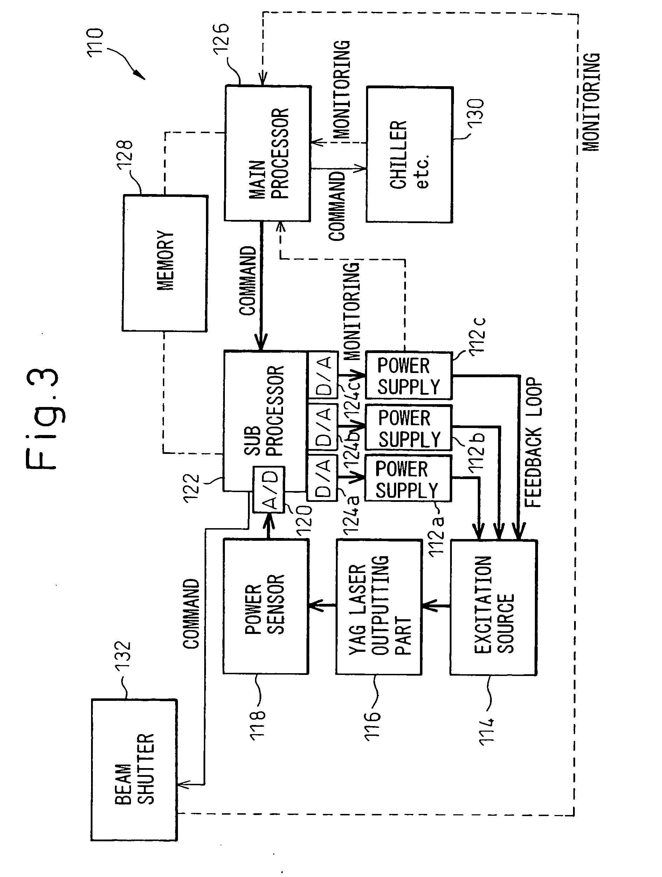

The number of the power supplies 12 is one in the above first embodiment, however, the number may be increased to enhance the laser output. Accordingly, a system is often configured such that plural power supplies of the system may be commanded individually. Therefore, Fig. 3 shows one example, as a second embodiment, which includes points of the invention and such a system. In the second embodiment, a component of the second embodiment similar to a component of the first embodiment is indicated by a numeral added with 100 to a corresponding numeral of the first embodiment.

As shown in Fig. 3, in the second embodiment, three power supplies 112a, 112b and 112c for activating an excitation source 114 for the laser (YAG laser in this case) are provided. Accordingly, three D/A converter 124a, 124b and 124c for D/A converting signals fed to the power supplies are provided. Other components of the second embodiment may have same functions as corresponding components of the first embodiment. When the excitation source 114 is activated by the power supplies, the laser beam is radiated and detected by a power sensor 118 arranged as a laser output monitor. A detected signal by the power sensor is A/D converted and fed to a sub processor 122. Similarly to the sub processor of the first embodiment (Fig. 2), the sub processor 122 executes some processes which must be processed rapidly, among processes to be executed by a main processor 126. One example of such a sub processor is a digital signal processor (DSP) which can execute a high-speed processing.

The sub processor 122 compares the current laser output value to a set value (a desired control value) and, calculates a deviation value between them in a predetermined period. The sub processor 122 generates a feedback signal for feedback controlling the laser output based on the deviation and, outputs the feedback signals to the power supplies 112a, 112b and 112c individually, according to a command from the main processor 126. The feedback signals are D/A converted by the D/A converter 124a, 124b and 124c before reaching the power supplies 112a, 112b and 112c, respectively. The power supplies 112a, 112b and 112c adjust the current supplied to the laser excitation source 114 according to the feedback signals, in order to control the laser output. The command from the main processor 126 includes the set value (the desired control value) of the laser output. The data of the set value can be read from a memory 128 by the main processor 126.

Similarly to the main processor 26 of the first embodiment, the main processor 126 is used for processing a sequential control such as condition monitoring of the power supplies 112a, 112b and 112c, a control and condition monitoring a chiller 130, and a detection of other alarms. In other words, the main processor 126 is used to execute processes which do not need to be processed rapidly. Although the main processor 126 may control a beam shutter 132 which is desired to be high-speed controlled, it is preferable that the beam shutter 132 is controlled by the sub processor 122 instead.

In this way, it is also possible to almost eliminate a factor regarding a load on a sequential control process, which may delay the feedback control, by shifting the processes of the feedback control desired to be processed rapidly to the sub processor 122 from the main processor 126. Further, the analog circuit as used in the above second prior art is not necessary and, therefore, a flexible control can be executed by software and with high flexibility.

As described above, in the first and second embodiments, the sub processor capable of executing a high-speed processing is used. Another important factor for speeding up the feedback control is the response of the power sensor for monitoring the laser output. Therefore, it is preferable that a photodiode is used as the power sensor. Several kinds of photodiodes are known, and the typical photodiode includes one or more materials among Si, Ge, GaAs and InGaAs. These materials have short response times and normally respond within 200 µs. Therefore, the response of the feedback control may be less than 200 µs by combining the photodiode with the above DSP capable of high-speed processing. Preferably, a thermopile detecting the output by temperature change is not used, because the response of the feedback control may be too long using the thermopile.

According to the present invention, in controlling the laser oscillator, the main processor executes the sequence control and the sub processor executes the feedback control of the laser output by the optical output command from the main processor. Therefore, the control load on the processor executing the feedback control is small and the feedback control may be executed rapidly. When a high-speed math-processing processor is used as the sub processor, the period time of the feedback control may be several 10 µs order time and a start time of the feedback control may be one milli-second order time. Using the laser oscillator of the invention, a flexible control, which an analog circuit cannot execute, may be executed by software. Further, as the function and the performance of the laser oscillator or the laser device may be easily improved by changing the software, maintenance of the laser device is highly improved.

It is further effective to use a photodiode as the power sensor so as to improve the response of the feedback.

A plurality of power supplies is often used for a high output laser oscillator. In this case, the performance of the oscillator may further improved by commanding the power supplies individually by the sub processor.

While the invention has been described with reference to specific embodiments chosen for the purpose of illustration, it should be apparent that numerous modifications could be made thereto, by one skilled in the art, without departing from the basic concept and scope of the invention.

## Claims

1. A laser oscillator comprising:
a power supply (12);
an excitation source (14) supplied with electric power by the power supply (12);
a laser outputting part (16) for outputting laser beam excited by the excitation source (14);
an optical output detector (18) for detecting the laser beam output by the laser outputting part (16) and for outputting an optical output signal;
a main processor (26) for outputting an optical output command; and
digital signal processor (22) receiving the optical output command from the main processor (26) and the optical output signal in digital format from the optical output detector (18), the digital signal processor (22) generating a feedback signal for feedback controlling the laser output based on the comparison between the optical output command and the optical output signal in digital format, and outputting the feedback signal to the power supply (12).

2. The laser oscillator as set forth in claim 1, wherein the period of the feedback control is less than 200 µs.

3. The laser oscillator as set forth in claim 1, wherein a photodiode is used as the optical output detector (18).

4. The laser oscillator as set forth in claim 3, wherein the photodiode (18) comprises at least one material among Si, Ge, GaAs and InGaAs.

5. The laser oscillator as set forth in claim 1, wherein the laser oscillator comprises a plurality of power supplies (112a, 112b, 112c) and the digital signal processor (22) feeds the feedback signal to each of the power supplies (112a, 112b, 112c) individually.

6. The laser oscillator as set forth in claim 1, wherein the laser oscillator further comprises a coolant circulating device (30) and the main processor (26) is used for controlling and monitoring the coolant circulation device (30), for monitoring the power supply (12), and for detecting alarms.

## Patentansprüche

1. Laseroszillator, der umfasst:
eine Stromversorgung (12),
eine Erregerquelle (14), die mit Strom aus der Stromversorgung versorgt wird,
einen Laserabgabeteil (16) zur Abgabe eines Laserstrahls, der durch die Erregerquelle (14) erregt wird,
einen optischen Ausgangsdetektor (18) zur Bestimmung der vom Laserabgabeteil (16) abgegeben Laserstrahlausgangsleistung zur Abgabe eines optischen Ausgangssignals,
einen Hauptprozessor (26) zur Abgabe eines optischen Ausgangsbefehls, und
einen digitalen Signalprozessor (22), der den optischen Ausgangsbefehl vom Hauptprozessor (26) und das optische Ausgangssignal vom optischen Ausgangsdetektor (18) in digitaler Form empfängt, bei dem der digitale Signalprozessor (22) ein Rückkopplungssignal zur Rückkopplungsregelung der Laserausgangsleistung auf der Grundlage des Vergleichs des optischen Ausgangsbefehls mit dem optischen Ausgangssignal in digitaler Form erzeugt und das Rückkopplungssignal an die Stromversorgung (12) abgibt.

2. Laseroszillator nach Anspruch 1, bei dem die Wiederholungsfrequenz der Rückkopplungsregelung kleiner als 200 µs ist.

3. Laseroszillator nach Anspruch 1, bei dem ein Fotodiode als optischer Ausgangsdetektor (18) eingesetzt wird.

4. Laseroszillator nach Anspruch 3, bei dem die Fotodiode (18) wenigstens einen Werkstoff der Werkstoffe Si, Ge, GaAs, und InGaAs aufweist.

5. Laseroszillator nach Anspruch 1, bei dem der Laseroszillator eine Reihe von Stromversorgungen (112a, 112b, 112c) aufweist und der digitale Signalprozessor (22) das Rückkopplungssignal einzeln an jede der Stromvorsorgungen (112a, 112b, 112c) abgibt.

6. Laseroszillator nach Anspruch 1, bei dem der Laseroszillator ferner eine Kühlmittelumwälzeinrichtung (30) aufweist und der Hauptprozessor (26) zur Regelung und Überwachung der Kühlmittelumwälzeinrichtung (30) eingesetzt wird, um die Stromversorgung (12) zu überwachen und Alarmzustände zu ermitteln.

## Revendications

1. Oscillateur laser comprenant:
une alimentation électrique (12);
une source d'excitation (14) alimentée en électricité par l'alimentation électrique (12) ;
une pièce d'émission laser (16) permettant d'émettre un faisceau laser excité par la source d'excitation (14) ;
un détecteur de sortie optique (18) permettant de détecter le faisceau laser émis par la pièce d'émission laser (16) et permettant d'émettre un signal de sortie optique ;
un processeur principal (26) permettant d'émettre une commande de sortie optique ; et
un processeur de signal numérique (22) recevant la commande de sortie optique provenant du processeur principal (26) et le signal de sortie optique au format numérique provenant du détecteur de sortie optique (18), le processeur de signal numérique (22) générant un signal de réaction pour asservir la sortie laser d'après la comparaison entre la commande de sortie optique et le signal de sortie optique au format numérique, et pour émettre le signal de réaction vers l'alimentation électrique (12).

2. Oscillateur laser selon la revendication 1, dans lequel la période d'asservissement est inférieure à 200 µs.

3. Oscillateur laser selon la revendication 1, dans lequel une photodiode est utilisée en tant que détecteur de sortie optique (18).

4. Oscillateur laser selon la revendication 3, dans lequel la photodiode (18) comprend au moins un matériau parmi les éléments suivants : Si, Ge, GaAs et InGaAs.

5. Oscillateur laser selon la revendication 1, dans lequel l'oscillateur laser comprend une pluralité d'alimentations électriques (112a, 112b, 112c) et le processeur de signal numérique (22) transmet individuellement le signal de réaction à chacune des alimentations électriques (112a, 112b, 112c).

6. Oscillateur laser selon la revendication 1, dans lequel l'oscillateur laser comprend en outre un dispositif de circulation de produit réfrigérant (30) et le processeur principal (26) est utilisé pour commander et surveiller le dispositif de circulation de produit réfrigérant (30) pour surveiller l'alimentation électrique (12) et pour détecter les alarmes.
